# EUROPEAN PATENT APPLICATION

(11) **EP 0 607 814 A1**
(43) Date of publication of application: **27.07.1994**
(21) Application number: 94100145.5
(22) Date of filing: 07.01.1994
(51) Int. Cl.: H04N 5/782, H04N 7/087, G04G 15/00, G04G 5/00

(54) **Television signals receiver with a clock having an automatic reset device**

(30) Priority: 22.01.1993 IT RM930032
(71) Applicant: EDICO S.r.l., I-00197 Roma (IT)
(72) Inventor: d'Errico, Federico, I-00186 Roma (IT)

(57) **Abstract**

A television signals receiver is described, in particular a video cassette recorder, comprising a clock; the main characteristic of the invention consists in that the receiver comprises means for automatically resetting the clock to the exact hour.

## Description

The invention regards a television signals receiver, in particular a video cassette recorder, comprising a clock.

As is known, all video recorders are normally equipped with a clock that has the principle aim of programming the turning on and/or turning off of the recorder.

Television receivers may also incorporate a clock, even if for such apparatus the programming of the turning on and off does not call for the same importance as for video recorders.

As in all clocks, however, they become subject over time to unprecise functioning; in fact, even though they normally have a relatively high level of precision, one or more seconds a day, after a month the error may be of one or more minutes.

As the user does not normally remember to reset the clock, a considerable error may be accumulated over several months, of such to influence the precision of the functioning.

The present invention has the aim of indicating a television signals receiver, in particular a magnetic tape recorder that overcomes the aforementioned drawbacks and facilitates the user in the use of the apparatus.

For reaching the indicated aim, the present invention has as its subject a television signals receiver, in particular a video cassette recorder, comprising a clock, characterised in that the receiver comprises means for automatically resetting the clock to the exact hour.

The invention will now be described in detail, with reference to the annexed drawings, that illustrate an example of an embodiment of the invention, supplied purely as an explanatory and non limiting example.

Figure 1 schematically represents in a simplified manner a television signals receiver according to the invention.

Figure 2 represents the simplified diagram of the clock incorporated in the receiver of figure 1.

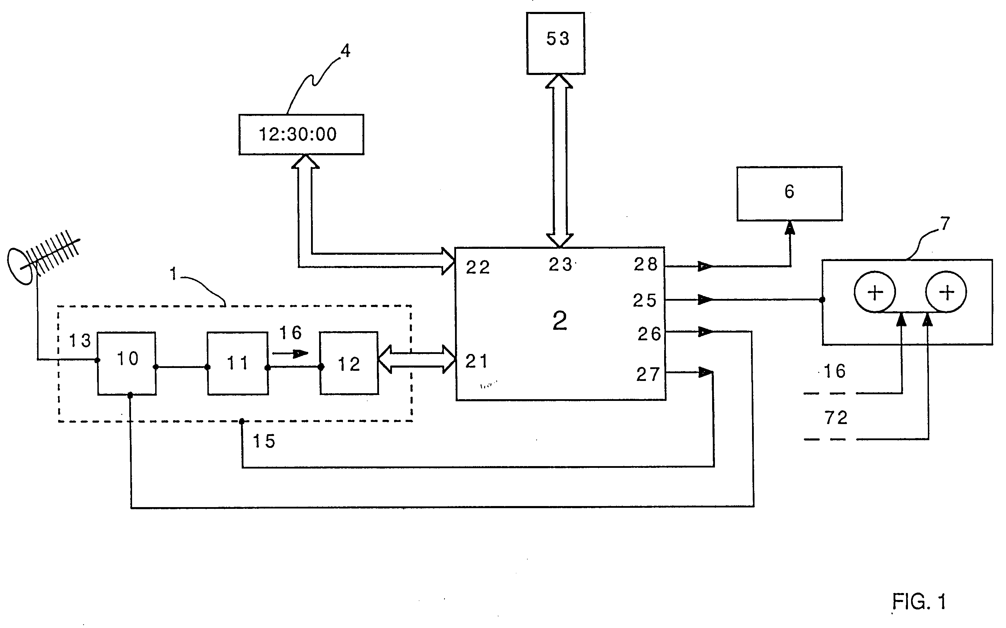

In figure 1, that schematically represents in a simplified manner a television signals receiver according to the invention, including a magnetic video cassette recorder number 13 indicates the input for the signal of the antenna of the receiving circuit block 1 of the system.

Number 10 indicates a tuner, number 11 the intermediate frequency amplifier with detector and number 12 the decoding circuit of the teletext signal transmitted together with the television signal containing the exact hour, obtained at the broadcasting site by way of an extremely precise clock, possibly periodically set by way of a sample signal, such as that coming from the Istituto Elettrotecnico Galileo Ferraris in Turin.

Number 16 indicates the demodulated video signal.

Number 2 indicates a microcomputer that manages the system; being connected to block 12 from which it receives at terminal 21 the decoded teletext signal; it is also connected to a digital clock 4 by way of the terminal 22 and to an interface 53 by way of the terminal 23.

The interface 53 supplies the microcomputer 2 with the commands given by the user; the interface 53 may be a numeric keyboard (for example associated to a remote control) or any other suitable device for the introduction of data.

The microcomputer 2, by way of the terminal 28 can control a display 6 (for instance for indicating the number of the channel selected); by way of the terminal 25 it can control the beginning and the end of a recording on the recorder 7; by way of the terminal 26 it can control the tuner 10 by selecting the channel chosen by the user; and finally, by way of the terminal 27 it can turn on or off the receiving part of the system (15). The recorder 7 receives from block 11 the video and audio signals to record by way of the conductors 16 and 72.

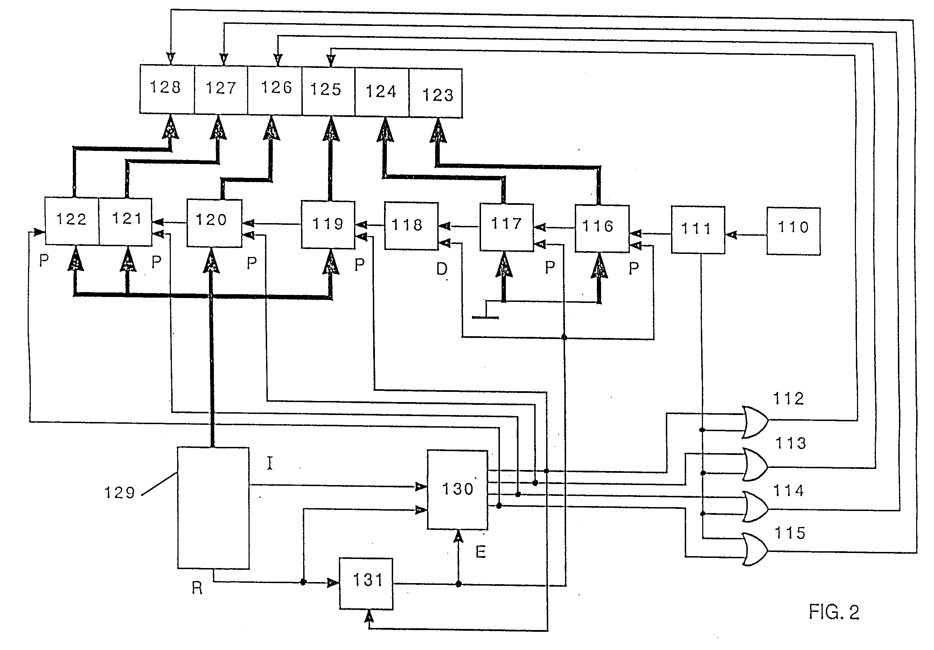

In figure 2, the simplified diagram of the digital clock 4 is represented.

In figure 2 with 110 an impulse generator is indicated that succeed in time over regular intervals and that can be represented for example by a quartz controlled oscillator, followed by a suitable former according to known techniques.

In the case of a television said oscillator can be for example a double line frequency oscillator (31250 Hz).

The generator 110 drives a first divider 111 (impulse counter), equipped with two outputs.

The first output is connected to first inputs, parallel between themselves, of four gates OR (112,113,114,115).

The second output is connected to a second divider (counter) 116.

The divider 111 has between the input and second output an equal ratio of the repetition frequency of the generator 110 (expressed in Hz); i.e. to said second output an impulse every second appears.

The first output can have a ratio, respect the input of the divider, equal or minor to (for example equal to a fifth) of the ratio presented by the second output; for example if the frequency of the generator 110 is of 31250 Hz, the divisional ratio (count) can be 31250/5=6250 for the first output and of 31250 for the second output.

To the first output in such case 5 impulses every second appear The divider 116 divides by 10; to divider 116 follows a third divider 117 that divides by 6; it is understood that from divider 116 an impulse exits every 10 seconds and from divider 117 an impulse every 60 seconds.

The divider 117 drives, by way of a buffer 118, a further divider 119, that divides by 10 and to which follows a divider 120 that divides by 6; and finally to divider 120 follows divider 121 that divides by 10 and a final divider 122 that divides by 3.

From the divider 119 an impulse exits every 10 minutes; from divider 120 and impulse every 60 minutes.

The circuits 116,117,119,120,121 and 122 are equipped with abilitation inputs (indicated with P in the figure) to be pre-positioned on a determined number available on ulterior inputs; the latter inputs are each represented by four wires indicated for simplicity in the figure by a single heavy line.

Considering that a day is composed of 24 hours and not 30, the dividers 121 and 122 incorporate a known appropriate logic network that zeroes them on the overall count of 24.

The circuit 118 has a deactivation input indicated with D.

Each of the dividers 116,117,119,120,121 and 122 is connected with 4 wires and a display element (for instance a known luminous indicator of the 7 segment LED type) that is able to display the corresponding number.

Such 6 display elements (indicated in the figure with 123,124,125,126,127 and 128, respectively indicate the seconds (123-124), the minutes (126-127) and hours (128-129); at least the elements 125,126,127 and 128, are equipped with a further activation input; such inputs are respectively connected to the outputs of the gates 112,113,114 and 115.

The command circuit 129 (represented by the microcomputer 2 of figure 1) has three outputs; a first output, constituted by 4 wires, supplies the pre-positioning inputs of the dividers 119,120,121 and 122, to which it supplies in binary code the information corresponding to the number to be set.

A second output, indicated with I, connects the command circuit with a counter 130 that counts by 4, that supplies an impulse every time that a number is set.

A third output, indicated with R, is connected with a flip-flop 131 and with a zeroing input 130 and supplies an impulse when the clock has to be reset.

The counter 130 has 4 outputs connected respectively to the supply inputs of the dividers 119,120,121, and 122 and to second inputs of the gates 112,113,114 and 115; the output connected to the divider 119 is also connected to a reset input of the flip-flop 131.

An output of this flip-flop is connected to an activating input (E) of the counter input 130, to the activating inputs (P) of the dividers 116 and 117 and to the deactivating input (D) of the separator 118.

The functioning of the described system is the following.

As explained, for successive divisions, from the generator 110 impulses every second, every ten seconds, every minute, every ten minutes, every hour, etc. are obtained; these impulses cause the respective counters-dividers to advance, which in turn drive the numbers of the display.

It is supposed that the clock is functioning and the microcomputer wishes to reset it; the microcomputer first of all provides to send the reset signal R.

This causes:
- the change of state of the flip-flop 131 and consequently the zeroing (by way of the inputs P) of the dividers 116 and 117 (number of seconds); the seconds start from zero in the instant of the reset signal and then continue to advance;
- the block (deactivation) of the separator 118 (the 4 outputs of the counter 130 pass to zero) thus causing, by way of the gates 112,113,114 and 115, an intermittent functioning of the frequency of 5Hz of the remaining elements of the display.

The microcomputer then provides to set the number of the hours and minutes to the desired value, sending the respective signals to the dividers 122,121,120 and 119; once the four numbers are arranged the counter 130 has all the outputs high and the flip-flop 131 is reset. At this point the separator 118 is once again activated and the counter 130 is blocked.

The microcalculator, as said, receives the information of the exact hour from the teletext decoder 12 (to which the microcomputer provides to automatically request it, for example every 24 hours, or at another determined interval).

It can also be provided that the user can, by way of appropriate commands of the keyboard 53, request the resetting of the time.

The teletext decoder 12 can also be advantageously of the controllable type by way of a bus (for example the SAA 5243 type, controllable by way of 1²C bus); such type of decoder is able, upon request of the microcalculator, to extract the hour from the line O of the teletext and to pass it to the same microcalculator.

The automatic resetting can also be provided, for example, every time that the signals receiver is turned on.

From the given description the advantages of the television signals receiver according to the invention result in being clear.

In particular it allows for having always available automatically the exact time, with consequent advantages.

It is clear that the skilled man may produce numerous modifications to the device described as an example, without for this departing from the novelty principles inherent in the inventive idea.

A possible variation could consist for example in using for the resetting of the clock a different signal from that of the teletext, for example a sample signal periodically transmitted by appropriate institutes, for example in Italy, L'Istituto Galileo Ferraris as previously mentioned.

It is also clear that the materials and the components indicated in the description can be substituted with equivalent techniques.

## Claims

1. Television signals receiver, in particular a video cassette recorder, comprising a clock (4), characterised in that the receiver comprises means (2,12) for automatically resetting the clock (4) to the exact hour.

2. Television signals receiver according to claim 1, characterised in that the resetting of the clock (4) is carried out upon a command of the user.

3. Television signals receiver according to claim 1, characterised in that the resetting of the clock (4) is carried out over pre-determined periods of time, without the intervention of the user.

4. Television signals receiver according to claim 1, characterised in that the resetting of the clock (4) is carried out automatically upon the turning on of the receiver.

5. Television signals receiver according to claim 1, characterised in that the time with which the clock (4) is reset is extracted from a signal inserted in the received television signal.

6. Television signals receiver according to claim 5, characterised in that the time with which the clock (4) is reset is extracted from the received teletext signal.

7. Television signals receiver according to claim 1, characterised in that the time with which the clock (4) is reset is extracted from a sample signal coming from a qualified source.

8. Television signals receiver according to one or more of the previous claims, characterised in that said means for the automatic resetting of the clock (4) with the exact time comprises a microcomputer (2).

9. Television signals receiver according to claims 6 and 8, characterised in that said means for the automatic resetting of the clock (4) with the exact time comprises a decoder (12) of teletext signals, connected with said microcomputer (2).

10. Television signals receiver according to one or more of the previous claims, characterised in that it includes a magnetic tape recorder (7) for video signals.
